(19) Europäisches Patentamt
European Patent Office
Office européen des brevets

(11) EP 3 575 106 A1

(12) EUROPEAN PATENT APPLICATION

(43) Date of publication:
**04.12.2019 Bulletin 2019/49**

(21) Application number: **19175979.4**

(22) Date of filing: **22.05.2019**

(51) Int Cl.:
***B60C 1/00*** (2006.01) ***C08K 3/04*** (2006.01)
***C08K 3/36*** (2006.01) ***C08K 5/37*** (2006.01)
***C08K 5/5398*** (2006.01) ***C08L 7/00*** (2006.01)
***C08L 9/00*** (2006.01) ***C08L 9/06*** (2006.01)
***C08J 3/20*** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.05.2018 JP 2018105437**

(71) Applicant: **Sumitomo Rubber Industries, Ltd.**
**Kobe-shi, Hyogo-ken 651-0072 (JP)**

(72) Inventors:
- **MAEKAWA, Tetsuya**
  **Kobe-shi, Hyogo 651-0072 (JP)**
- **TANAKA, Tatsuhiro**
  **Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

# (54) PNEUMATIC TIRE

(57) A pneumatic tire having excellent high-temperature grip performance and abrasion resistance is provided. The pneumatic tire is a tire having a tread composed of a predetermined rubber composition comprising a diene rubber comprising isoprene rubber, carbon black, silica, a compound comprising a predetermined bonding unit I and a bonding unit II, and a compound represented by a predetermined formula.

EP 3 575 106 A1

## Description

### TECHNICAL FIELD

This invention relates to a tire, and more particularly to a pneumatic tire having a tread composed of a predetermined rubber composition.

### BACKGROUND OF THE INVENTION

Tires are required to have grip performance on various road surfaces. In particular, in the summer season when atmospheric temperatures are high, road-surface temperatures become high and the temperature of the tread when being run also increases, so improving grip performance on high-temperature road surfaces is desired. A general characteristic of rubber compositions, however, is that hysteresis loss (tan $\delta$), which contributes greatly to grip performance, tends to decrease the higher the temperature is, leading to the problem of grip performance deteriorating.

Conventionally, with the objective of improving grip performance on high-temperature road surfaces, methods that have been adopted in order to increase hysteresis loss in rubber compositions for treads have included a method of changing the softener from an oil to a liquid polymer, a method of increasing the amount of resin, and a method of adding resin having a high softening point. Particularly, in order to improve grip performance on high-temperature road surfaces, a method of adding a large amount of resin having a high softening point has been effective and is widely practiced.

### SUMMARY OF THE INVENTION

In JP 2016-74834, a method of incorporating a fine particle-size carbon black into a modified natural rubber in order to improve wet grip performance and abrasion resistance is proposed, but grip performance (high-temperature gripping properties) on high-temperature road surfaces has not been mentioned anywhere.

An object of the invention is to provide a pneumatic tire having a tire tread composed of a predetermined rubber composition which is excellent in high-temperature grip performance and abrasion resistance

The present inventors have made intensive studies and as a result, have found that the above-discussed problems can be solved by blending predetermined amounts of a predetermined silane coupling agent and a predetermined crosslinking aid into a rubber composition comprising an diene rubber component comprising a isoprene-based rubber, carbon black, and silica. The present inventors have made further studies and have completed the present invention.

Namely, the present invention relates to:

[1] a pneumatic tire having a tread composed of a rubber composition comprising a diene rubber comprising isoprene rubber, carbon black, silica, a compound comprising a bonding unit I represented by the Formula (1) and a bonding unit II represented by the Formula (2), and a compound represented by the Formula (3),

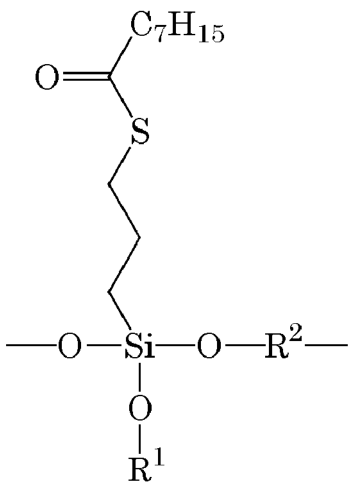

(1)

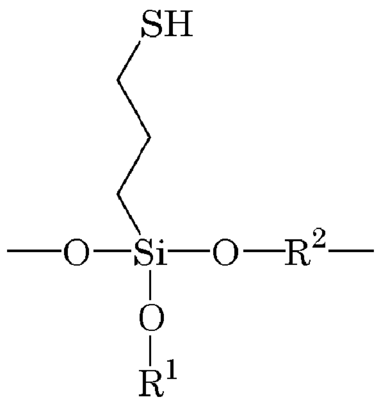

(2)

wherein

$R^1$ represents hydrogen, a halogen, a branched or unbranched alkyl group of 1-30 carbon atoms, a branched or unbranched alkenyl group of 2-30 carbon atoms, a branched or unbranched alkynyl group of 2-30 carbon atoms, or an alkyl group in which a terminal hydrogen of said alkyl group is replaced with a hydroxyl or carboxyl group, $R^2$ represents a branched or unbranched alkylene group of 1-30 carbon atoms, a branched or unbranched alkenylene group of 2-30 carbon atoms, a branched or unbranched alkynylene group of 2-30 carbon atoms, and $R^1$ and $R^2$ may form a ring structure, and

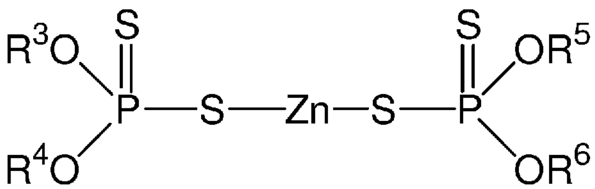

(3)

wherein

$R^3$-$R^6$ each represent, independently of each other, a straight-chain or branched-chain alkyl group of 1-18 carbon atoms, or a cycloalkyl group of 5-12 carbon atoms;

[2] a pneumatic tire of [1] above, in which a mean particle diameter of the carbon black is not more than 31 nm, preferably 17 to 29 nm, more preferably 19 to 27 nm;

[3] a pneumatic tire of [1] or [2] above, in which a mean particle diameter of the silica is not more than 31 nm, preferably 11 to 30 nm, more preferably 13 to 29 nm, further preferably 15 to 28 nm;

[4] a pneumatic tire of any one of [1] to [3] above, in which the diene rubber comprises 10-80% by mass, preferably 15-75% by mass, and further preferably 20-70% by mass of a natural rubber having nitrogen content of not more than 0.40% by mass, preferably not more than 0.30% by mass, more preferably not more than 0.20% by mass, and further preferably not more than 0.10% by mass;

[5] a pneumatic tire of [4] above, in which the diene rubber further comprises 15-45% by mass, preferably 16-44% by mass, more preferably 18-42% by mass, and further preferably 20-40% by mass of a styrene-butadiene rubber;

[6] a pneumatic tire of [4] or [5] above, in which the diene rubber further comprises 5-45% by mass, preferably 6-44% by mass, more preferably 8-42% by mass, and further preferably 10-40% by mass of a butadiene rubber;

[7] a pneumatic tire of any one of [1] to [6] above, in which in the rubber composition, a content of the diene rubber component is 100 parts by mass, a content of the carbon black is 20 to 100 parts by mass, preferably 25 to 90 parts by mass, more preferably 30 to 80 parts by mass, and further preferably 35 to 70 parts by mass, a content of the silica is 10 to 60 parts by mass, preferably 15 to 55 parts by mass, more preferably 18 to 50 parts by mass, and further preferably 20 to 40 parts by mass, a content of the compound comprising the bonding unit I and the bonding unit II is 3-15 parts by mass, preferably 4-12 parts by mass, more preferably 5-10 parts by mass based on 100 parts by mass of the silica, and a content of the compound represented by the Formula (3) is 10-200 parts by mass, preferably 15-180 parts by mass, more preferably 20-150 parts by mass, and further preferably 30-150 parts by mass based on 100 parts by mass of the compound comprising the bonding unit I and the bonding unit II;

[8] a pneumatic tire of any one of [1] to [7] above, in which the rubber composition further comprises 0.5-3.0 parts by mass, preferably 0.7-2.5 parts by mass, more preferably 1.0-2.0 parts by mass of the compound represented by the Formula (4)

$$R^7\text{-S-S-Y-S-S-}R^8 \qquad (4)$$

wherein

Y represents an alkylene group of 2-10 carbon atoms, and $R^7$ and $R^8$ represent a same or different monovalent organic group containing nitrogen atom, respectively;

[9] a pneumatic tire of any one of [1] to [8] above, in which a formulation ratio of the carbon black to the silica is 1.0 to 3.0, preferably 1.5 to 2.5; and

[10] a pneumatic tire of [8] or [9] above, in which a formulation ratio of the isoprene-based rubber (parts by mass) to total content (parts by mass) of the compound comprising the bonding unit I represented by the Formula (1) and the bonding unit II represented by the Formula (2) and of the compound represented by the Formula (4) is not less than 1 to not more than 40, preferably not less than 5 to not more than 39, more preferably not less than 8 to not more than 38, further preferably not less than 10 to not more than 37, still further preferably not less than 10 to not more than 36, and even further preferably not less than 10 to not more than 35.

According to the present invention, it is possible to provide a pneumatic tire excellent in high-temperature grip performance and abrasion resistance. In addition, the pneumatic tire of the present invention is excellent in steering stability and can also improve chip-cutting resistance.

While not intending to be bound by theory: in the present invention, by using a compound comprising the bonding unit I represented by the Formula (1) and the bonding unit II represented by the Formula (2) as the silane coupling agent, the silica-polymer bonding force can be strengthened. Given that, because the silane coupling agent has an oligomer type of molecular structure, its surfaces where it combines with silica are extensive, and a portion combining with the polymer are highly reactive "thiol groups", this is believed to contribute to intensifying the polymer-bonding strength. On the other hand, intensifying the polymer-bonding strength leads to a decrease in high-temperature-side tan $\delta$, deteriorating the grip performance. However, presumably because the silane coupling agent also has at its polymer bonding sites "thioester groups" in addition to the "thiol groups", thereby the abrasion resistance can be improved while deterioration of high-temperature-side tan $\delta$ can be kept under control. And in this invention, because of using together the compound shown by Formula (3) as a crosslinking auxilliary, the "thiol group" of a silane coupling agent can be capped during kneading. This suppresses excessive gel formation (bonding with the polymer), which is considered to further enhance the high-temperature-side tan $\delta$ (that is, exert a synergistic effect).

## DETAILED DESCRIPTION

A given pneumatic tire in one embodiment is characterized in that the tire has a tread composed of a rubber composition comprising a diene rubber comprising an isoprene-based rubber, carbon black, silica, a compound comprising a bonding unit represented by Formula (1) and a bonding unit represented by Formula (2), and a compound represented by Formula (3).

### <Rubber Components>

The rubber component is a diene rubber comprising an isoprene-based rubber. The isoprene-based rubber includes natural rubber (NR), isoprene rubber (IR), and the like. As an isoprene-based rubber, NR is preferably used in view of grip performance and abrasion resistance. Isoprene-based rubber may be used alone, or two or more types of isoprene-based rubber may be used in combination.

A diene rubber other than the isoprene-based rubber includes butadiene rubber (BR), styrene butadiene rubber (SBR), styrene isoprene rubber (SIR), styrene isoprene butadiene rubber (SIBR), chloroprene rubber (CR), acrylonitrile butadiene rubber (NBR), and the like. SBR is preferably used and, further, BR is preferably used as a diene rubber other than isoprene-based rubber in view of grip performance and abrasion resistance. The diene rubber other than isoprene-based rubber may be used alone or in combination with two or more thereof.

### <NR>

As a NR, natural rubbers usually used in the rubber industry and, moreover, epoxy natural rubbers (ENRs), hydrogenated natural rubbers (HNRs), modified natural rubbers (modified NRs) may suitably be used, and these rubbers are prepared by ordinary methods. Among them, a modified natural rubber is preferred.

A modified natural rubber is for example a natural rubber in which the proteins, other than natural polyisoprenoid components, contained in natural rubber latex are mainly reduced or removed (and preferably is a natural rubber in which impurities such as particles contained in natural rubber latex have a structure in which the isoprenoid components are covered with impurity components. Removing the impurities on the surface of the natural rubber particles interaction with the compounding ingredients also changes, whereby it is presumed that effects such as reduced energy loss and

improved durability are acquired. Further, removing impurities in the natural rubber latex can reduce odors unique to natural rubber.

As the modification treatment, known methods such as saponification treatment, enzyme treatment, mechanical treatment such as ultrasonic wave and centrifugal separation can be used without limitation, but among them, saponification treatment is preferred from the viewpoint of production efficiency, cost and dispersibility of white filler.

Natural rubber latexes include raw latex (field latex) collected by tapping of the *Hevea* tree, concentrated latexes in which the raw latex has been concentrated by centrifugation and/or a creaming method (such as purified latexes, high-ammonia latexes in which ammonia has been added to the latex by ordinary methods, and LATZ latexes in which the latex has been stabilized by zinc flower, TMTD (tetramethylthiuram disulfide) and ammonia). Among them, field latexes are preferably used due to their ease with which they are highly purified by controlling the pH.

The rubber content (solid rubber content) in the natural rubber latex is preferably 5-40% by mass, and more preferably 10-30% by mass, in terms of stirring efficiency and similar perspectives.

Examples of saponification treatments include the methods described in Japanese Patent Publication Nos. 2010-138359 and 2010-174169. More particularly, the method can be performed by adding a basic compound, and if necessary, a surfactant to a natural rubber latex, and then allowing it to stand for a period of time at a predetermined temperature. If necessary, stirring and so forth may be done.

As said basic compound, although not particularly limited, basic inorganic compounds are suitable from the perspective of their removal capabilities of protein, etc. Examples of such basic inorganic compounds include metal hydroxides such as alkali metal hydroxides and alkali earth metal hydroxides; metal carbonates such as alkali metal carbonates and alkali earth metal carbonates; metal bicarbonates such as alkali metal bicarbonates; metal phosphates such as alkali metal phosphates; metal acetates such as alkali metal acetates; metal hydrates such as alkali metal hydrates; and ammonia.

Alkali metal hydroxides include lithium hydroxide, sodium hydroxide, potassium hydroxide, and the like. Alkali earth metal hydroxides include magnesium hydroxide, calcium hydroxide, barium hydroxide, and the like. Alkali metal carbonates include lithium carbonate, sodium carbonate, potassium carbonate, and the like. Alkali earth metal carbonates include magnesium carbonate, calcium carbonate, barium carbonate, and the like. Alkali metal bicarbonates include lithium bicarbonate, sodium bicarbonate, potassium bicarbonate, and the like. Alkali metal phosphates include sodium phosphate, sodium hydrogen phosphate, and the like. Alkali metal acetates include sodium acetate, potassium acetate, and the like. Alkali metal hydrates include sodium hydrate, potassium hydrate, and the like. Among these, metal hydroxides, metal carbonates, metal bicarbonates, metal phosphates, and ammonia are preferred, and sodium hydroxide and potassium hydroxide, which are alkali metal hydroxides, are further preferred, in terms of efficiency of saponification and ease of treatment. These basic compounds may be used alone, or two or more compounds may be used in combination.

Examples of the surfactants include, without being particularly limited, known anionic surfactants such as polyoxyethylene alkyl ether sulfate salts, nonionic surfactants, and amphoteric surfactants. An anionic surfactant such as a polyoxyethylene alkyl ether sulfuric acid ester salt is preferable from the viewpoint that it can be well saponified without coagulating the rubber. It is be understood that in the saponification treatment, the addition amount of the basic compound and the surfactant , and the temperature and time of the saponification treatment should be appropriately set.

A coagulation drying operation is a process of coagulating the modified material obtained in a modifying process and then drying the coagulum to obtain a modified natural rubber. It is presumed that since in the prior modifying step the impurities on the surface of the natural rubber particles are removed from the natural rubber obtained in the coagulation drying step, a rubber composition comprising the obtained natural rubber excels in rubber material properties.

The coagulation method is not particularly limited, and the method includes adjusting pH to 4 to 7 by adding an acid such as formic acid, acetic acid, sulfuric acid or the like, and if necessary, further adding a polymer flocculant, and stirring. By coagulation, the rubber component of the modified product can be agglomerated, and coagulated rubber can be obtained.

The drying method is not particularly limited, and it can be carried out by using a usual dryer such as a trolley type dryer, a vacuum dryer, an air dryer, a drum dryer, or the like used in a drying step of a usual natural rubber manufacturing method such as TSR.

Drying is preferably carried out after washing the obtained coagulated rubber. The washing method is not particularly limited as long as impurities contained in the entire rubber can be sufficiently removed. For example, a method in which the rubber component is diluted with water, washed, and centrifuged, and a method in which the rubber is allowed to stand and the aqueous phase alone is discharged to take out the rubber component may be cited. Furthermore, when the washing is carried out after treating the coagulated rubber obtained with a basic compound, impurities trapped in the rubber during coagulation can be re-melted before washing, and impurities strongly adhered to the coagulated rubber can also be removed.

In the modified natural rubber, the nitrogen content is not more than 0.40 mass %. With this range, the effect of the present disclosure is exerted. The nitrogen content is preferably not more than 0.30 mass %, more preferably not

more than 0.20 mass %, and further preferably not more than 0.10 mass %. The nitrogen content can be measured by a conventional method such as the Kjeldahl method, for example. Nitrogen is derived from protein. As for the lower limit value of the nitrogen content, it is preferable that the nitrogen content is as low as possible. For example, 0.06 mass % or 0.01 mass % is considered to be a sufficiently low value.

The modified natural rubber preferably has a phosphorus content of not more than 200 ppm. With such a range, the rubber material properties tend toward improvements such as low fuel consumption. The phosphorus content is more preferably not more than 150 ppm, and still more preferably not more than 100 ppm. Here, the phosphorus content can be measured by a conventional method such as ICP luminescence analysis, for example. Phosphorus is derived from phospholipids (phosphorus compounds).

The gel content in the modified natural rubber is preferably not more than 20% by mass. Within such a range, the rubber material properties tend toward improvements such as low fuel consumption. The gel content is more preferably not more than 10% by mass, and further preferably not more than 7% by mass. Gel content means a value measured as an insoluble content in toluene which is a nonpolar solvent, and in the following, it may be simply referred to as "gel content rate" or "gel content" in some cases. The method of measuring the gel content is as follows. First, a natural rubber sample is immersed in dehydrated toluene, left to stand in the dark for 1 week, and then the toluene solution is centrifuged at $1.3 \times 10^5$ rpm for 30 minutes to separate insoluble gel content and toluene soluble matter. Then, the insoluble gel portion is solidified by adding methanol to it, and the gel content is determined from the ratio of the mass of the gel content to the original mass of the sample.

<Isoprene-based Rubber Content>

The content of the isoprene-based rubber in the rubber component is 10 to 80% by mass. When the content of the isoprene-based rubber is in this range, the effect of the present disclosure tends to be sufficiently exerted. The content of the isoprene-based rubber is preferably not less than 15% by mass, more preferably not less than 20% by mass. On the other hand, the content of the isoprene-based rubber is preferably not more than 75% by mass, more preferably not more than 70% by mass.

Further, the content of the isoprene-based rubber in the rubber component is preferably not less than 30 mass %, more preferably not less than 40 mass %, further preferably not less than 50 mass %, still more preferably not less than 60 mass %, from the viewpoint of chip-cutting resistance properties. The content in this case is preferably, for example, 80% by mass.

<SBR>

The SBR is not particularly limited, and examples thereof include an unmodified emulsion-polymerized styrene butadiene rubber (E-SBR), an solution-polymerized styrene butadiene rubber (S-SBR), a modified SBR thereof such as a modified emulsion polymerized styrene butadiene rubber (modified E-SBR) and a modified solution polymerized styrene butadiene rubber (modified S-SBR). Further, as the SBR, there are oil extension types in which flexibility is adjusted by adding an extender oil, and non-oil extended types to which extender oil is not added, but any of these can be used.

Of these, modified SBR is preferably used. The modified SBR is not particularly limited as long as it is a styrene butadiene rubber having a styrene content of 15 to 50 mass %, a weight average molecular weight (Mw) of not less than 200,000, and a terminal modification rate of 30 to 100%. Any of solution-polymerized SBR (S-SBR) and emulsion-polymerized SBR (E-SBR) can be used, and not only terminal modified SBR but also main chain-modified SBR, SBR coupled with tin, silicon compounds or the like (condensation products, those having a branched structure, etc.) can also be used. The terminal modification group is not particularly limited as long as it is a group having affinity with silica, and the introduced group is, for example, an alkoxysilyl group, an amino group, a hydroxyl group, a glycidyl group, an amide group, a carboxyl group, an ether group, a thiol group, a cyano group, a hydrocarbon group, an isocyanate group, an imino group, an imidazole group, a urea group, a carbonyl group, an oxycarbonyl group, a sulfide group, a disulfide group, a sulfonyl group, a sulfinyl group, a thiocarbonyl group, an ammonium group , an imide group, a hydrazo group, an azo group, a diazo group, a nitrile group, a pyridyl group, an alkoxy group, an oxy group, an epoxy group, a metal atom such as tin and titanium, and the like. Moreover, these functional groups may have a substituent. Among these, a primary, secondary and tertiary amino group (particularly, a glycidylamino group), an epoxy group, a hydroxyl group, an alkoxy group (preferably alkoxy group having 1 to 6 carbon atoms), an alkoxysilyl group (preferably alkoxysilyl group having 1 to 6 carbon atoms), and a hydrocarbon group are preferred. The modified SBR can be produced, for example, by the method described in Japanese Patent Publication No. 2014-19841.

The styrene content of SBR is preferably not less than 5.0% by mass, more preferably not less than 10.0% by mass, because sufficient grip performance and rubber strength can be obtained. The styrene content of SBR is preferably not more than 60.0 mass %, more preferably not more than 50.0 mass %, from the viewpoint of low fuel consumption. The styrene content of the SBR in this specification is a value calculated from $^1$H-NMR measurement.

The vinyl content (1,2-bonded butadiene unit amount) in the SBR is preferably not less than 10.0%, more preferably not less than 15.0%, because sufficient grip performance and rubber strength can be obtained. The vinyl content of the SBR is preferably not more than 65.0%, more preferably not more than 60.0%, from the viewpoint of low fuel consumption. The vinyl content of the SBR in this specification can be measured by the infrared absorption spectrum analysis method.
The content of the SBR in the rubber component is preferably 15 to 45% by mass. When the content of SBR is within this range, the effect of the present disclosure tends to be sufficiently exhibited. The content of SBR is preferably not less than 16% by mass, more preferably not less than 18% by mass, and further preferably not less than 20% by mass. On the other hand, the content of SBR is preferably not more than 44% by mass, more preferably not more than 42% by mass, and further preferably not more than 40% by mass. When an oil extended type SBR is used as the SBR, the content of the SBR itself as the solid content contained in the oil-extended type of SBR is defined as the content in the rubber component.
The SBRs may be used alone or in combination of two or more thereof.

<BR>

There are no particular restrictions on the BR, and various types of BR can be used such as a high-cis 1,4-polybutadiene rubber (high-cis BR), a 1,2-syndiotactic polybutadiene crystal-containing butadiene rubber (SPB-containing BR), a modified butadiene rubber (modified BR), and the like.
High-cis BR is a butadiene rubber having a cis 1,4 bond content (cis content) of not less than 90%. Examples of such high-cis BR include BR 1220 manufactured by Zeon Corporation, BR 130 B, BR 150 B manufactured by Ube Industries, Ltd., and the like. By including the high-cis BR, low temperature characteristics and abrasion resistance can be improved. The cis content is preferably not less than 95%, more preferably not less than 96%, and further preferably not less than 97%. The cis content of the butadiene rubber is a value measured by an infrared absorption spectrum analysis method.
The SPB-containing BR includes rubbers in which the 1,2-syndiotactic polybutadiene crystals are not simply crystals dispersed in BR but are chemically bonded to BR and dispersed. Examples of such SPB-containing BRs include VCR 303, VCR 412, VCR 617, and the like, manufactured by Ube Industries, Ltd.
Examples of modified BR include those obtained by polymerization of 1,3-butadiene with a lithium initiator and the addition of a tin compound, and further in which terminals of the modified BR molecules are bonded in tin-carbon bonds. Examples of such modified BR include BR 1250 H (tin modified) manufactured by Zeon Corporation, S modified polymer (silica modified) manufactured by Sumitomo Chemical Co., and the like.
Among these various types of BR, it is preferable to use high-cis BR from the viewpoint of excellent abrasion resistance.
From the viewpoint of abrasion resistance, the content of BR in the rubber component is preferably 5% by mass to 45% by mass, more preferably not less than 6% by mass, more preferably not less than 8% by mass, and further preferably not less than 10% by mass. The content of BR in the rubber component is preferably not more than 44% by mass, more preferably not more than 42% by mass, and further preferably not more than 40% by mass.
The BRs can be used alone or in a combination of two or more thereof.

<Other Rubber Components>

As the rubber component, other rubber components other than a diene rubber can be contained. Examples of such a rubber component include ethylene propylene diene rubber (EPDM), chloroprene rubber (CR), and the like. One or more other rubber components can also be used.

<Filler>

As the filler, carbon black and silica are used, but other fillers may be used. As such a filler, for example, fillers commonly used in this field such as calcium carbonate, clay, and the like can be used.

<Carbon Black>

The carbon black is not particularly limited, and those commonly used in the rubber industry such as SAF, ISAF, HAF, FF, and GPF can be used.
The average particle diameter of the carbon black is preferably not more than 31 nm, more preferably not more than 29 nm, and further preferably not more than 27 nm, from the viewpoint of good breaking strength and sufficient abrasion resistance. The average particle diameter of the carbon black is preferably not less than 15 nm, more preferably

not less than 17 nm, and further preferably not less than 19 nm, from the viewpoint of good processability. The average particle diameter of the carbon black is a number average particle diameter, which is measured as an average value for 100 arbitrary particles by a transmission electron microscope.

The nitrogen adsorption specific surface area ($N_2$ SA) of the carbon black is preferably not less than 80 $m^2$ / g, and more preferably not less than 90 $m^2$ / g from the viewpoints of breaking strength, abrasion resistance and the like. On the other hand, the $N_2$ SA of the carbon black is preferably not more than 200 $m^2$ / g, and more preferably not more than 150 $m^2$ / g, from the viewpoint of processability. The $N_2$ SA of the carbon black can be obtained by Method A of JIS K 6217.

The dibutyl phthalate (DBP) oil absorption amount of the carbon black is preferably not less than 100 mL / 100 g, more preferably not less than 105 mL / 100 g, and further preferably not less than 110 mL / 100 g from the viewpoints of reinforcing property, abrasion resistance, and the like. On the other hand, the DBP oil absorption amount of the carbon black is preferably not more than 160 mL / 100 g, and more preferably not more than 150 mL / 100 g from the viewpoint of manufacturing without difficulty. The DBP oil absorption amount of the carbon black can be obtained by the JIS K 6217-4 measurement method.

The content of the carbon black is preferably 20 to 100 parts by mass with respect to 100 parts by mass of the rubber component. It is preferably not less than 20 parts by mass from the viewpoints of reinforcing properties and abrasion resistance, and it is preferably not more than 100 parts by mass from the viewpoint of low fuel consumption. The content of the carbon black is preferably not less than 25 parts by mass, more preferably not less than 30 parts by mass, and further preferably not less than 35 parts by mass. On the other hand, the content of the carbon black is preferably not more than 90 parts by mass, more preferably not more than 80 parts by mass, and further preferably not more than 70 parts by mass.

The carbon blacks can be used alone or in a combination of two or more thereof.

<Silica>

When silica is blended, it is not particularly limited as silica, and examples thereof include dry method silica (anhydrous silicic acid), wet method silica (hydrous silicic acid) and the like, but wet method silica is preferable because it has many silanol groups.

The average particle size of the silica is preferably not more than 31 nm, more preferably not more than 30 nm, further preferably not more than 29 nm, and still further preferably not more than 28 nm, from the viewpoint of its rubber-reinforcing properties. The average particle diameter of the silica is preferably not less than 11 nm, more preferably not less than 13 nm, and further preferably not less than 15 nm from the viewpoint of good processability. The average particle diameter of the silica is a number average particle diameter, which is measured as an average value for any 100 particles by a transmission electron microscope.

The nitrogen adsorption specific surface area ($N_2$ SA) of the silica is preferably not less than 100 $m^2$ / g, more preferably not less than 130 $m^2$ / g, further preferably not less than 150 $m^2$ / g, and still further preferably not less than 180 $m^2$ / g, and preferably not more than 300 $m^2$ / g, more preferably not more than 280 $m^2$ / g, and further preferably not more than 260 $m^2$ / g, from the viewpoints of reinforcing effectiveness and dispersibility.

The content of the silica is preferably 10 to 60 parts by weight based on 100 parts by weight of the rubber component. It is preferably not less than 10 parts by mass from the viewpoint of exothermic properties, and it is preferably not more than 60 parts by mass from the viewpoint of processability. The content of the silica is more preferably not less than 15 parts by mass, further preferably not less than 18 parts by mass, and still further preferably not less than 20 parts by mass. On the other hand, the content of the silica is more preferably not more than 55 parts by mass, further preferably not more than 50 parts by mass, still further preferably not more than 40 parts by mass, and even further preferably not more than 30 parts by mass.

The silica can be used alone or in a combination of two or more thereof.

<Filler Content>

The content of the filler as a whole including silica is preferably 30 parts by mass to 160 parts by mass based on 100 parts by mass of the rubber component. Within the above range, the effect of the present disclosure tends to be sufficiently exhibited. The content of the filler is preferably not less than 35 parts by mass, more preferably not less than 40 parts by mass, more preferably not less than 50 parts by mass, and further preferably not less than 60 parts by mass. On the other hand, the content of the filler is preferably not more than 120 parts by mass, more preferably not more than 100 parts by mass, and further preferably not more than 90 parts by mass. The mixing ratio of carbon black (parts by mass) based on silica (parts by mass) is preferably 1.0 to 3.0, more preferably 1.5 to 2.5 from the viewpoint of the effect of the present disclosure.

<Silane Coupling Agent>

The silane coupling agent includes a compound comprising a bonding unit I represented by the Formula (1) and a bonding unit II represented by the Formula (2). By blending the silane coupling agent comprising the bonding unit I and the bonding unit II, it is possible to improve the fuel economy performance and the abrasion resistance performance while securing good processability.

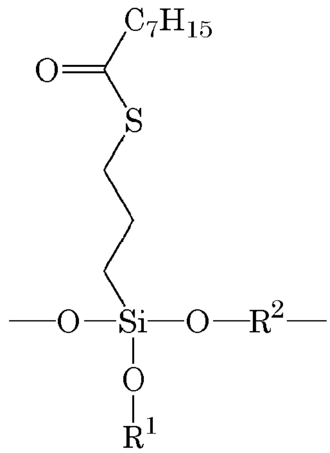 (1)

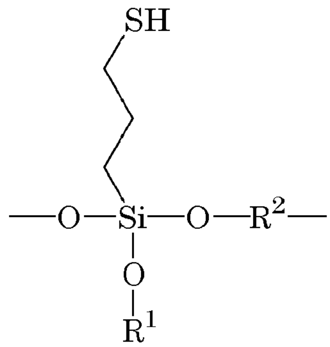 (2)

In the formulas, $R^1$ is hydrogen, a halogen, a branched or unbranched alkyl group having 1 to 30 carbon atoms, a branched or unbranched alkenyl group having 2 to 30 carbon atoms, a branched or unbranched alkynyl group having 2 to 30 carbon atoms, or a group in which hydrogen at the terminal of the alkyl group is substituted with a hydroxyl group or a carboxyl group, $R^2$ represents a branched or unbranched alkylene group having 1 to 30 carbon atoms, a branched or unbranched alkenylene group having 2 to 30 carbon atoms or a branched or unbranched alkynylene group having 2 to 30 carbon atoms, and $R^1$ and $R^2$ may form a ring structure.

By using compounds comprising a bonding unit I represented by the Formula (1) and a bonding unit II represented by the Formula (2), increase in viscosity during processing is kept under control, compared to using polysulfide silanes such as bis-(3-triethoxysilylpropyl)tetrasulfide. This is probably because the sulfide moiety of the bond unit I is a C-S-C bond and is thermally stable compared to tetrasulfide and disulfide, so the increase in Mooney viscosity is small.

Also, shortening of scorch time is kept under control as compared with mercaptosilane such as 3-mercaptopropyltrimethoxysilane. This is because, though the bonding unit II has the structure of mercaptosilane, the -SH group of the bonding unit II is covered with the $-C_7H_{15}$ portion of the bonding unit I, whereby the -SH group hardly reacts with the polymer, and it is thought that scorching (rubber scorching) is difficult to occur.

In view of good effects of the present disclosure, the content of the bonding unit I in the silane coupling agent having the above structure is preferably not less than 30 mol%, more preferably not less than 50 mol%, and preferably not more than 99 mol%, and more preferably not more than 90 mol%. The content of the bonding unit II is preferably not less than 1 mol%, more preferably not less than 5 mol%, and still more preferably not less than 10 mol%, and preferably not more than 70 mol%, more preferably not more than 65 mol%, and still more preferably not more than 55 mol%. The total content of the bonding units I and II is preferably not less than 95 mol%, more preferably not less than 98 mol%, and further preferably 100 mol%. It should be noted that the content of the bonding units I and II also includes the case where the bonding units I and II are positioned at the terminal of the silane coupling agent. The form in which

the bonding units I and II are located at the terminal of the silane coupling agent is not particularly limited, and it suffices to form units corresponding to Formulas (1) and (2) representing the bond units I and II .

As the $R^1$ halogen, chlorine, bromine, fluorine and the like can be cited.

Examples of the branched or unbranched alkyl group having 1 to 30 carbon atoms for $R^1$ include methyl, ethyl, n-propyl, isopropyl, n-butyl, iso-butyl, sec-butyl, tert-butyl, a pentyl, a hexyl, a heptyl, a 2-ethylhexyl, an octyl, a nonyl, a decyl, and the like. The alkyl group preferably has 1 to 12 carbon atoms.

Examples of the branched or unbranched alkenyl group having 2 to 30 carbon atoms for $R^1$ include vinyl, 1-propenyl, 2-propenyl, 1-butenyl, 2-butenyl, 1-pentenyl, 2-pentenyl, 1-hexenyl, 2-hexenyl, 1-octenyl, and the like. The alkenyl group preferably has 2 to 12 carbon atoms.

Examples of the branched or unbranched alkynyl group having 2 to 30 carbon atoms for $R^1$ include an ethynyl, a propynyl, a butynyl, a pentynyl, a hexynyl, a heptynyl, an octynyl, a nonynyl, a decynyl, an undecynyl, a dodecynyl, and the like. The carbon number of the alkynyl group is preferably 2 to 12.

Examples of the branched or unbranched alkylene group having 1 to 30 carbon atoms represented by $R^2$ include ethylene, propylene, butylene, pentylene, hexylene, heptylene, octylene, nonylene, decylene, undecylene, dodecylene, a tridecylene, a tetradecylene, a pentadecylene, a hexadecylene, a heptadecylene, an octadecylene group, and the like. The carbon number of the alkylene group is preferably 1 to 12.

Examples of the branched or unbranched alkenylene group having 2 to 30 carbon atoms represented by $R^2$ include a vinylene, a 1-propenylene, a 2-propenylene, a 1-butenylene, a 2-butenylene, a 1-pentenylene, a 2-pentenylene, 1-hexenylene, 2-hexenylene, 1-octenylene and the like. The carbon number of the alkenylene group is preferably 2 to 12.

Examples of the branched or unbranched alkynylene group having 2 to 30 carbon atoms represented by $R^2$ include an ethynylene, a propynylene, a butynylene, a pentynylene, a hexynylene, a heptynylene, an octynylene, a noninylene, a decynylene, a undecinylene, a dodecynylene, and the like. The carbon number of the alkynylene group is preferably 2 to 12.

In the silane coupling agent having the above structure, the repeating number (x + y) of the sum of the repeating number (x) of the bonding unit I and the repeating number (y) of the bonding unit II is preferably in the range of 3 to 300. Within this range, since the $-C_7H_{15}$ of the bonding unit I covers the mercaptosilane of the bonding unit II, it is possible to inhibit the scorching time from becoming short and ensure good reactivity with silica and rubber components.

As the silane coupling agent having the above structure, for example, NXT-Z30, NXT-Z45, NXT-Z60 or the like manufactured by Momentive Co., Ltd. can be used. These may be used alone, or two or more of them may be used in combination.

The content of the silane coupling agent having the above structure is preferably 3 to 15 parts by mass based on 100 parts by mass of silica. When it is not less than 3 parts by mass, it is preferable from the viewpoints of rubber strength and abrasion resistance. When it is not more than 15 parts by mass, it is preferable from the viewpoint of an effect commensurate with the cost. The content is preferably not less than 4 parts by mass, and more preferably not less than 5 parts by mass. On the other hand, the content is preferably not more than 12 parts by mass, and more preferably not more than 10 parts by mass.

The silane coupling agents may be used alone or in combination of two or more thereof.

<Vulcanization Aid>

The vulcanization aid is a compound represented by the Formula (3).

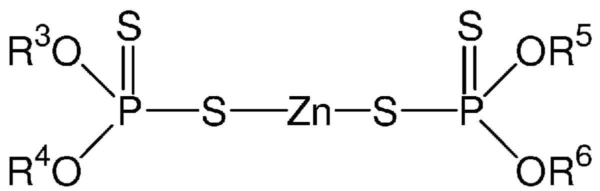

(3)

In the formula, $R^3$ to $R^6$ each independently represents a linear or branched alkyl group having 1 to 18 carbon atoms, or a cycloalkyl group having 5 to 12 carbon atoms.

$R^3$ to $R^6$ in the Formula (3) each independently represent a linear or branched alkyl group having 1 to 18 carbon atoms or a cycloalkyl group having 5 to 12 carbon atoms. Examples of the linear or branched alkyl group represented by $R^3$ to $R^6$ include a methyl, an ethyl, an n-propyl, an isopropyl, a n-butyl, a 4-methylpentyl, a 2-ethylhexyl, an octyl, octadecyl and the like, while examples of the cycloalkyl group include a cyclopentyl, a cyclohexyl, a cyclooctyl, and the like. Among them, $R^3$ to $R^6$ are preferably straight-chain or branched-chain alkyl groups having 2 to 8 carbon atoms from the viewpoint of easy dispersion in the rubber component and easy production. An n-butyl, an n-propyl, an iso-propyl, and an n-octyl are further preferable.

Examples of the compound represented by the Formula (3) include TP-50 and ZBOP-50 manufactured by Rhein Chemie and compounds similar thereto (for example, those in which $R^3$ to $R^6$ are n-propyl, iso-propyl, or octyl) and the like can be used.

The content of (the content of the active ingredients in) the compound represented by the Formula (3) is preferably 10 to 200 parts by mass based on 100 parts by mass of the compound comprising the bonding unit I and the bonding unit II. Within such a range, there is a tendency that the effect of the present disclosure can be exerted. The content is preferably not less than 15 parts by mass, more preferably not less than 20 parts by mass, and still more preferably not less than 30 parts by mass. On the other hand, the content is preferably not more than 200 parts by mass, more preferably not more than 180 parts by mass, and still more preferably not more than 150 parts by mass.

The vulcanization aids represented by the Formula (3) may be used alone or in a combination of two or more thereof.

As the vulcanization aid, in addition to the compounds represented by the Formula (3), conventionally used ones can be used, and examples of such vulcanization aids include zinc oxide, stearic acid and the like.

<Vulcanizing Agent>

As the vulcanizing agent, usual vulcanizing agents such as sulfur can be used, but it is preferable to use a compound represented by the Formula (4). This is because by using the vulcanizing agent, CC bonds having high binding energy and high thermal stability can be retained in the rubber composition. This makes it possible to improve abrasion resistance and mechanical strength while maintaining good low fuel consumption.

$$R^7\text{-S-S-Y-S-S-}R^8 \qquad (4)$$

In the formula, Y represents an alkylene group having 2 to 10 carbon atoms, and $R^7$ and $R^8$, which may be the same or different, each represent a monovalent organic group containing nitrogen atom.

The alkylene group (having 2 to 10 carbon atoms) of Y is not particularly limited and may be a linear, branched or cyclic alkylene group, and among them, a linear alkylene group is preferable. The carbon number is more preferably 4 to 8. When the carbon number of the alkylene group is 1, the thermal stability is poor and there is a tendency that the effect due to having an alkylene group cannot be obtained, and when the carbon number is not less than 11, it tends to be difficult to form a crosslinked chain represented by the following formula -S-S-Y-S-S-.

Examples of the alkylene group satisfying the above conditions include an ethylene, a trimethylene, a tetramethylene, a pentamethylene, a hexamethylene, a heptamethylene, an octamethylene, a decamethylene and the like. Among others, a hexamethylene group is preferable because crosslinking represented by -S-S-Y-S-S- between polymers is smoothly formed and is thermally stable.

$R^7$ and $R^8$ are not particularly limited as long as they are monovalent organic groups containing nitrogen atom, but those containing at least one aromatic ring are preferable, and N-C(=S)-bond in which a carbon atom is bonded to a dithio group, is more preferred. It may be linear, branched or cyclic, but is preferably branched.

$R^7$ and $R^8$ may be the same as or different from each other, but they are preferably the same for reasons such as ease of production.

Examples of the compound satisfying the above conditions include 1,2-bis(N,N'-dibenzylthiocarbamoyldithio)ethane, 1,3-bis(N,N'-dibenzylthiocarbamoyldithio)propane, 1,4-bis(N,N'-dibenzylthiocarbamoyldithio)butane, 1,5-bis(N,N'-dibenzylthiocarbamoyldithio)pentane, 1,6-bis(N,N'-dibenzylthiocarbamoyldithio)hexane, 1,7-bis(N,N'-dibenzylthiocarbamoyldithio)heptane, 1,8-bis(N,N'-dibenzylthiocarbamoyldithio)octane, 1,9-bis(N,N'-dibenzylthiocarbamoyldithio)nonane, 1,10-bis(N,N'-dibenzylthiocarbamoyldithio)decane and the like. Among them, 1,6-bis(N,N'-dibenzylthiocarbamoyldithio)hexane is preferable because it is thermally stable and excellent in polarizability.

The content of the compound represented by the Formula (4) is preferably 0.5 to 3.0 parts by mass based on 100 parts by mass of the rubber component. Within such a range, the effect of the present disclosure tends to be exhibited. The content of the compound represented by the Formula (4) is preferably not less than 0.7 parts by mass, and more preferably not less than 1.0 parts by mass. On the other hand, the content of the compound represented by the Formula (4) is preferably not more than 2.5 parts by mass, and more preferably not more than 2.0 parts by mass.

When sulfur is added in addition to the compound represented by the Formula (4) as a vulcanizing agent, its content is more than 0 parts by mass to not more than 2 parts by mass based on 100 parts by mass of the rubber component. The content of sulfur is restricted so as not to diminish the effect of blending the compound represented by the Formula (4). The content of sulfur is preferably not less than 0.1 parts by mass, more preferably not less than 0.2 parts by mass, further preferably not less than 0.3 parts by mass, and still further preferably not less than 0.4 parts by mass. On the other hand, the content of sulfur is preferably not more than 1.5 parts by mass, and more preferably not more than 1.0 part by mass.

The compound represented by the Formula (4) may be used alone or in combination of two or more thereof.

<Other Ingredients>

In addition to the above components, the rubber composition may comprise a compounding agent conventionally used in the rubber industry, for example, a plasticizer or oil, an antioxidant, a vulcanization accelerator, and the like.

Examples of the vulcanization accelerator include compounds of guanidine type, aldehyde-amine type, aldehyde-ammonia type, thiazole type, sulfenamide type, thiourea type, thiuram type, dithiocarbamate type, and xanthate type. These vulcanization accelerators may be used alone or in combination of two or more thereof. In the case of containing a vulcanization accelerator, the content thereof based on 100 parts by mass of the rubber component is preferably not less than 0.3 parts by mass, and more preferably not less than 0.5 parts by mass. The content of the vulcanization accelerator is preferably not more than 2.0 parts by mass, and more preferably not more than 1.5 parts by mass. When the content of the vulcanization accelerator is within the above range, a suitable crosslink density tends to be obtained.

The content of the plasticizer based on 100 parts by mass of the rubber component is not less than 1 part by mass, preferably not less than 3 parts by mass from the viewpoint of processability. The content of the plasticizer is preferably not more than 40 parts by mass, and more preferably not more than 20 parts by mass, from the viewpoints of abrasion resistance and steering stability. It should be noted that the content of the plasticizer in the present specification includes the oil content contained in oil extended rubber and insoluble sulfur.

Examples of the oil include process oils, vegetable oils and fats, animal oils and fats, and the like. The content of oil based on 100 parts by mass of the rubber component is preferably not less than 2 parts by mass, and more preferably not less than 5 parts by mass from the viewpoint of processability. Further, the content of oil is preferably not more than 40 parts by mass from the viewpoint of load in terms of process.

<Miscellaneous>

The ratio of the content (parts by mass) of the isoprene-based rubber to the total content (parts by mass) of the compound comprising the bonding unit I represented by the Formula (1) and the bonding unit II represented by the Formula (2) and the compound represented by the Formula (4) (parts by mass) is preferably not less than 1 and not more than 40. When the ratio is in such a range, the effect of the present disclosure tends to be sufficiently exhibited. The ratio is more preferably not less than 2, further preferably not less than 5, further preferably not less than 8, and still further preferably not less than 10, whereas the ratio is more preferably not more than 39, further preferably not more than 38, still further preferably not more than 37, even more preferably not more than 36, and yet even more preferably not more than 35.

<Production of Rubber Composition>

As a method for producing the rubber composition, a known method can be used. For example, the rubber composition can be produced by such a method as, among the above-mentioned components, components other than sulfur and a vulcanization accelerator are kneaded first with a Banbury mixer, a kneader, an open roll or the like, and then sulfur and a vulcanization accelerator are added to the obtained kneaded mixture, kneaded, and then vulcanized.

<Production of Tire>

A predetermined tire according to one embodiment can be produced by a usual method using the rubber composition. That is, by extruding the rubber composition into the shape of a tread at the stage of unvulcanization, laminating it together with other tire members on the tire molding machine, molding an unvulcanized tire by the usual method, and then heating and pressurizing the unvulcanized tire in a vulcanizer.

The tire thus obtained can be used as a pneumatic tire of any vehicle by filling it with air, but since it is excellent in high-temperature gripping properties and abrasion resistance, it is particularly suitable for use as a high-performance tire to be used as tire for competition such as racing, in particular, as high-performance dry tires for dry road surfaces.

EXAMPLE

Although the present disclosure will be described based on examples, the present disclosure is not limited to the examples.

Hereinafter, various chemicals used in Examples and Comparative examples are collectively shown.
Natural rubber (NR): TSR 20
Modified natural rubber (modified NR): the one prepared in the following Production Example 1
Modified styrene butadiene rubber (modified SBR): the one prepared in Production Example 2 below

Butadiene rubber (BR): BR 150 B (cis content: 97%) manufactured by Ube Industries, Ltd.
Carbon black (CB) 1: N220 (average particle diameter: 23 nm, $N_2SA$: 114 $m^2/g$, DBP oil absorption amount: 114 mL / 100 g) manufactured by Cabot Japan K.K.
Carbon black (CB) 2: Prototype carbon black (average particle size: 15 nm, $N_2SA$: 181 $m^2/g$, DBP oil absorption amount: 124 mL / 100 g)
Silica 1: Ultrasil360 (average particle size: 28 nm $N_2SA$: 55 $m^2/g$) manufactured by Evonik Degussa GmbH
Silica 2: Ultrasil9000GR (average particle size: 15 nm, $N_2SA$: 240 $m^2/g$) manufactured by Evonik Degussa GmbH
Silane coupling agent (coupling agent) 1: Si266 (bis(3-triethoxysilylpropyl)disulfide) manufactured by Evonik Degussa GmbH
Silane coupling agent (coupling agent) 2: NXT-Z100 (polymer composed of bonding unit II) manufactured by Momentive Performance Materials Inc.
Silane coupling agent (coupling agent) 3: NXT-Z45 (copolymer of bonding unit I and bonding unit II (bonding unit I: 55 mol%, bonding unit II: 45 mol%) manufactured by Momentive Performance Materials Inc.)
Zinc oxide: Grade 2 of zinc oxide manufactured by Mitsui Mining & Smelting Co., Ltd.
Stearic acid: beads stearic acid manufactured by NOF CORPORATION Cross-linking aid: TP-50 (compound represented by Formula (3) ($R^3$ to $R^6$: n-butyl group) manufactured by Rhein Chemie Corporation, content of active ingredient: 50%
Antioxidant: Nocrac 6C manufactured by Ouchi Shinko Chemical Industry Co., Ltd.
Vulcanizing agent 1: sulfur (powdered sulfur manufactured by Tsurumi Chemical Industry Co., Ltd.)
Vulcanizing agent 2: Vulcuren VP KA9188 (compound represented by Formula (4) (1,6-bis(N,N'-dibenzylthiocarbamoyldithio)hexane) manufactured by Lanxess Japan)
Vulcanization accelerator: Nocceler NS manufactured by Ouchi Shinko Chemical Industry Co., Ltd.

<Production Example 1 (Production of Modified NR)>

After adjusting the solid content concentration (DRC) of natural rubber latex (field latex obtained from Titex Co.) to 30% (w/v), 10 g of Emal-E and 20 g of NaOH were added to 1000 g of natural rubber latex, saponification reaction was carried out for 48 hours to obtain saponified natural rubber latex. Water was added to this latex and diluted to 15% (w/v) of DRC, and formic acid was added while slowly stirring to adjust the pH to 4.0 to 4.5 and aggregate. The agglomerated rubber was pulverized, washed twice with 1000 mL of water, and then dried at 110°C for 2 hours to obtain a solid rubber (modified NR). The nitrogen content, phosphorus content and gel content ratio of the solid rubber (modified NR) obtained in Production Example 1 and the above natural rubber were measured by the following method. The results are shown in Table 1.

<Measurement of Nitrogen Content>

The nitrogen content was measured using CHN CORDER MT-5 (manufactured by Yanaco Analytical Industry Co., Ltd.). For the measurement, a calibration curve for obtaining nitrogen content was prepared using antipyrine as a standard substance. Next, about 10 mg of the sample of the modified natural rubber obtained in Production Example 1 or TSR was weighed, and the average value was obtained from three measurement results to obtain the nitrogen content of the sample.

<Measurement of Phosphorus Content>

Phosphorus content was determined using an ICP emission spectrometer (ICPS-8100, manufactured by Shimadzu Corporation). Further, 31 P-NMR measurement of phosphorus was carried out for components extracted with chloroform from the raw rubber, purified and dissolved in CDCl3 by using an NMR analyzer (400 MHz, AV400M, manufactured by Nippon Bruker Co., Ltd.) assuming that a measurement peak of the P atoms in an 80% phosphoric acid aqueous solution as a reference point (0 ppm).

<Measurement of Gel Content>

70.00 mg of raw rubber sample cut into 1 mm × 1 mm was weighed, 35 mL of toluene was added to it, and allowed to stand in a cool and dark place for 1 week. Subsequently, it was subjected to centrifugal separation to precipitate a gel component insoluble in toluene, the soluble matter of the supernatant was removed, only the gel content was solidified with methanol, and then it was dried and the mass was measured. The gel content (mass %) was determined by the following formula.

$$\text{Gel content (mass \%)} = [\text{mass (mg) of solid after drying} / \text{mass (mg) of initial sample}] \times 100$$

Table 1

| | Modified natural rubber (Production Example 1) | Natural rubber (those described above) |
|---|---|---|
| Nitrogen content (% by mass) | 0.36 | 3.8 |
| Phosphorus content (ppm) | 88 | 590 |
| Gel content (% by mass) | 7 | 29.8 |

<Production Example 2 (Production of Modified SBR)>

A stainless steel polymerization reactor having an inner volume of 30 liters equipped with a stirrer was washed and dried, and inside gas of the polymerization reactor was replaced with dry nitrogen. Next, 15.3 kg of industrial hexane (density 680 kg / $m^3$), 912 g of 1,3-butadiene, 288 g of styrene, 9.1 mL of tetrahydrofuran, and 6.4 mL of ethylene glycol diethyl ether were charged into the polymerization reactor. Next, a small amount of a hexane solution of n-1-butyllithium as a scavenger was charged into the polymerization reactor in order to detoxify impurities acting inactivating the polymerization initiator in advance. A n-hexane solution of n-butyllithium (content of n-butyllithium 19.2 mmol) was charged into the polymerization reactor, and the polymerization reaction was initiated. Polymerization reaction was carried out for 3 hours. During the polymerization reaction, the temperature inside the polymerization reactor was adjusted to 65°C, and the solution in the polymerization reactor was stirred at a stirring speed of 130 rpm. In the polymerization reactor, 1368 g of 1,3-butadiene and 432 g of styrene were continuously added. 20 mL of THF solution containing 19.2 mmol of 2-[1-(2-hydroxy-3,5-di-t-pentylphenyl)ethyl]-4,6-di-t-pentylphenylacryl ate was charged into a polymerization reactor, and the polymer solution was stirred for 15 minutes. Next, 20 mL of a hexane solution containing 1.2 mL of methanol was charged into the polymerization reactor, and the polymer solution was stirred for 5 minutes. 12.0 g of 2-tert-butyl-6-(3-tert-butyl-2-hydroxy-5-methylbenzyl)-4-methylphenyl acrylate (Sumilizer GM manufactured by Sumitomo Chemical Co., Ltd.), 6.0 g of pentaerythrityltetrakis(3-lauryl thiopropionate) (Sumilizer TP-D manufactured by Sumitomo Chemical Co., Ltd.) was charged into a polymerization reactor, and then the polymer solution was evaporated at room temperature for 24 hours and further dried under reduced pressure at 55°C for 12 hours to obtain a polymer, modified SBR.

<Examples 1 to 6 and Comparative examples 1 to 5>

According to the contents of the formulation shown in Table 2, of the compounding materials, chemicals other than the vulcanizing agent and the vulcanization accelerator were kneaded for 5 minutes with a 1.7 L Banbury mixer until temperature reached 150°C of discharging temperature to obtain a kneaded product. Next, sulfur and a vulcanization accelerator were added to the obtained kneaded product and kneaded for 5 minutes at 80°C using a biaxial open roll to obtain an unvulcanized rubber composition.

<Vulcanized Rubber Sheet>

The obtained unvulcanized rubber composition was vulcanized at 170°C for 10 minutes to obtain a vulcanized rubber sheet.

<Test Tire>

The obtained unvulcanized rubber composition was extruded into the shape of a tread, laminated together with other tire members on a tire molding machine, and vulcanized at 170°C for 10 minutes to obtain a test tire (tire size: 195/65R15, passenger car tire).

<High-Temperature Grip Property (Viscoelasticity Test)>

Using a viscoelasticity spectrometer manufactured by Iwamoto Seisakusho, loss tangent tan δ of the vulcanized rubber sheet at 70°C was measured under the conditions of a frequency of 10 Hz, an initial strain of 10% and a dynamic strain of 2%. Then, the measurement result of Comparative example 1 was taken as 100, and the index was indicated by the following calculation formula. The larger the high-temperature grip index is, the better the grip performance is.

(High-temperature grip index) = (Tanδ (70°C) of each formulation) / (tanδ (70°C) of Comparative example 1) × 100

<Chip-Cutting Resistance>

A tensile test was carried out on a rubber test piece taken from the tread of the test tire according to JIS K 6251 "Vulcanized rubber and thermoplastic rubber - Determination of tensile properties," and elongation at break EB (%) was measured. Then, the elongation at break of Comparative example 1 was taken as 100, and the EB of each formulation was indexed by the following calculation formula. The larger the numerical value is, the higher the rubber strength is and the better the chip-cutting resistance is.

(Chip cutting resistance index) = (EB of each formulation) / (EB of Comparative example 1) × 100

<Abrasion Resistance>

With respect to the above vulcanized rubber sheet, the amount of abrasion was measured using a Lambourn type abrasion tester under the conditions of room temperature, a load of 1.0 kgf, and a slip ratio of 30%. Then, the measurement result of Comparative example 1 was taken as 100, and the index was indicated by the following calculation formula. The larger the abrasion resistance index is, the better the abrasion resistance performance is.

(Abrasion resistance index) = (abrasion amount of Comparative example 1) / (abrasion amount of each formulation) × 100

<Steering Stability (Actual Vehicle Evaluation)>

Each test tire was rim assembled to a rim (rim size: 18 × 8 J), filled to an internal pressure (230 kPa), and mounted on four wheels of a vehicle (Toyota Land Cruiser 200). Then, a test course of a dry asphalt road was run by two riders, and the race change and the behavior of the vehicle at the time of turning were evaluated by sensory evaluation of the driver. The evaluation result is indicated by an index with Comparative example 1 taken as 100. The larger the numerical value is, the better.

Table 2

| | | Comparative Example | | | | | Example | | | | | |
|---|---|---|---|---|---|---|---|---|---|---|---|---|
| Formulation (parts by mass) | | 1 | 2 | 3 | 4 | 5 | 1 | 2 | 3 | 4 | 5 | 6 |
| | NR | 55 | 55 | -- | -- | -- | -- | -- | -- | -- | -- | 55 |
| | Modified NR | -- | -- | 55 | 55 | 55 | 55 | 20 | 70 | 55 | 55 | -- |
| | Modified SBR | 25 | 25 | 25 | 25 | 25 | 25 | 40 | 20 | 25 | 25 | 25 |
| | BR | 20 | 20 | 20 | 20 | 20 | 20 | 40 | 10 | 20 | 20 | 20 |
| | CB1 | 50 | 50 | -- | -- | -- | -- | -- | -- | -- | -- | 50 |
| | CB2 | -- | -- | 50 | 50 | 50 | 50 | 50 | 50 | 50 | 50 | -- |
| | Silica 1 | 25 | 25 | -- | -- | -- | -- | -- | -- | -- | -- | 25 |
| | Silica 2 | -- | -- | 25 | 25 | 25 | 25 | 25 | 25 | 25 | 25 | -- |
| | Coupling agent 1 | 1.5 | -- | 1.5 | -- | 1.5 | -- | -- | -- | -- | -- | -- |
| | Coupling agent 2 | -- | 1.5 | -- | -- | -- | -- | -- | -- | -- | -- | -- |
| | Coupling agent 3 | -- | -- | -- | 1.5 | -- | 1.5 | 1.5 | 1.5 | 1.5 | 1.5 | 1.5 |
| | Zinc oxide | 2 | 2 | 2 | 2 | 2 | 2 | 2 | 2 | 2 | 2 | 2 |
| | Stearic acid | 2.5 | 2.5 | 2.5 | 2.5 | 2.5 | 2.5 | 2.5 | 2.5 | 2.5 | 2.5 | 2.5 |
| | Cross-linking aid | -- | -- | -- | -- | 1.0 | 1.0 | 1.0 | 1.0 | 0.5 | 2.0 | 1.0 |
| | Antioxidant | 2 | 2 | 2 | 2 | 2 | 2 | 2 | 2 | 2 | 2 | 2 |
| | Vulcanizing agent 1 | 1.4 | 1.4 | 1.4 | 1.4 | 0.5 | 0.5 | 0.5 | 0.5 | 1.0 | 0.2 | 0.5 |
| | Vulcanizing agent 2 | -- | -- | -- | -- | -- | 1.5 | 1.5 | 1.5 | 0.5 | 3.0 | -- |
| | Vulcanization accelerator | 1.2 | 1.2 | 1.2 | 1.2 | 1.2 | 1.2 | 1.2 | 1.2 | 1.2 | 1.2 | 1.2 |
| Vulcanizing agent / Coupling agent (mass ratio) | | -- | -- | -- | -- | 0.67 | 0.67 | 0.67 | 0.67 | 0.33 | 1.33 | 0.66 |
| Evaluation | High-temperature grip performance | 100 | 85 | 115 | 115 | 115 | 125 | 135 | 110 | 120 | 130 | 135 |
| | Abrasion resistance | 100 | 105 | 115 | 120 | 115 | 115 | 125 | 120 | 115 | 115 | 125 |
| | Chip-cutting resistance | 100 | 105 | 115 | 115 | 115 | 115 | 80 | 140 | 115 | 115 | 125 |
| | Steering stability | 100 | 85 | 105 | 105 | 105 | 115 | 125 | 110 | 115 | 120 | 125 |

As is clear from Table 2 above, the tire of the example greatly improves the grip performance (high-temperature grip property) on a high-temperature road surface while maintaining the abrasion resistance. In addition, the tire of the example is excellent in steering stability. Furthermore, the tire of the example also has improved chip-cutting resistance depending on the amount of modified NR.

INDUSTRIAL APPLICABILITY

According to the present disclosure, it is possible to provide a pneumatic tire having excellent high temperature grip performance and abrasion resistance. In addition, the pneumatic tire of the present disclosure is excellent in steering stability and can also improve chip-cutting resistance.

**Claims**

1. A pneumatic tire having a tire tread composed of a rubber composition comprising a diene rubber comprising isoprene rubber; carbon black; silica; a compound comprising a bonding unit I represented by Formula (1) and a bonding unit II represented by Formula (2); and a compound represented by Formula (3):

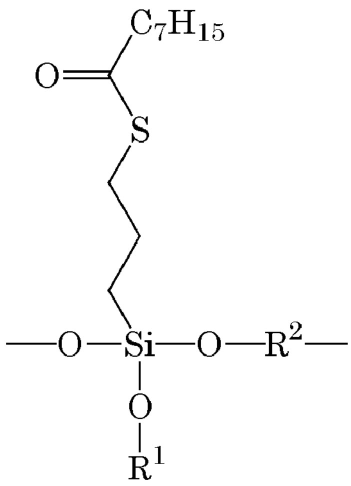
(1)

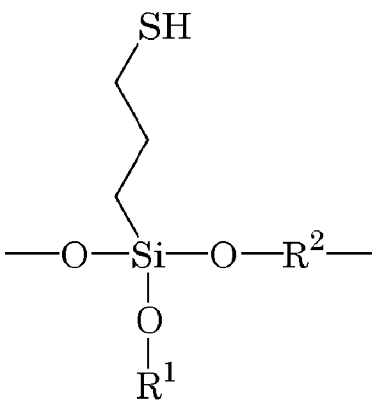
(2)

wherein
$R^1$ represents hydrogen, a halogen, a branched or unbranched alkyl group of 1-30 carbon atoms, a branched or unbranched alkenyl group of 2-30 carbon atoms, a branched or unbranched alkynyl group of 2-30 carbon atoms, or an alkyl group in which a terminal hydrogen of said alkyl group is replaced with a hydroxyl group or a carboxyl group, $R^2$ represents a branched or unbranched alkylene group of 1-30 carbon atoms, a branched or unbranched alkenylene group of 2-30 carbon atoms, or a branched or unbranched alkynylene group of 2-30 carbon atoms, and $R^1$ and $R^2$ may form a ring structure; and

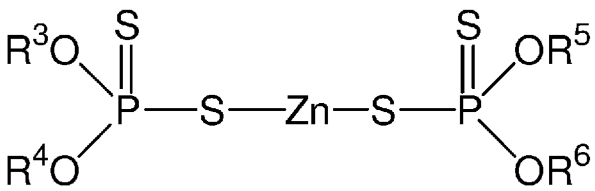

(3)

wherein
$R^3$-$R^6$ each represent, independently of each other, a straight-chain or branched-chain alkyl group of 1-18 carbon atoms, or a cycloalkyl group of 5-12 carbon atoms.

2. The pneumatic tire of claim 1, wherein a mean particle diameter of the carbon black is not more than 31 nm.

3. The pneumatic tire of claim 1 or 2, wherein a mean particle diameter of the silica is not more than 31 nm.

4. The pneumatic tire of any one of claims 1 to 3, wherein the diene rubber comprises 10-80% by mass of a natural rubber having nitrogen content of not more than 0.40% by mass.

5. The pneumatic tire of claim 4, wherein the diene rubber further comprises 15-45% by mass of a styrene-butadiene rubber.

6. The pneumatic tire of claim 4 or 5, wherein the diene rubber further comprises 5-45% by mass of a butadiene rubber.

7. The pneumatic tire of any one of claims 1 to 6, wherein in the rubber composition, a content of the diene rubber component is 100 parts by mass, a content of the carbon black is 20 to 100 parts by mass, a content of the silica is 10 to 60 parts by mass, a content of the compound comprising the bonding unit I and the bonding unit II is 3 to 15 parts by mass based on 100 parts by mass of the silica, and a content of the compound represented by Formula (3) is 100 to 200 parts by mass based on 100 parts by mass of the compound comprising the bonding unit I and the bonding unit II.

8. The pneumatic tire of any one of claims 1 to 7, wherein the rubber composition further comprises 0.5 to 3.0 parts by mass of a compound represented by Formula (4):

$$R^7\text{-S-S-Y-S-S-}R^8 \qquad (4)$$

wherein
Y represents an alkylene group of 2-10 carbon atoms, and $R^7$ and $R^8$ represent a same or different monovalent organic group containing nitrogen atom, respectively.

9. The pneumatic tire of any one of claims 1 to 8, wherein a formulation ratio of the carbon black to the silica is 1.0 to 3.0.

10. The pneumatic tire of claim 8 or 9, wherein a formulation ratio of the isoprene-based rubber (parts by mass) to total content (parts by mass) of the compound comprising the bonding unit I represented by Formula (I) and the bonding unit II represented by Formula (2) and of the compound represented by Formula (4) is not less than 1 to not more than 40.

Europäisches Patentamt
European Patent Office
Office européen des brevets

# EUROPEAN SEARCH REPORT

Application Number
EP 19 17 5979

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 3 300 921 A1 (SUMITOMO RUBBER IND [JP])<br>4 April 2018 (2018-04-04)<br>* paragraphs [0014], [0048], [0051], [0095], [0099] *<br>* tables 1, 2 *<br>* claims 1, 4, 6 * | 1-7,9,10<br>8 | INV.<br>B60C1/00<br>C08K3/04<br>C08K3/36<br>C08K5/37<br>C08K5/5398<br>C08L7/00<br>C08L9/00<br>C08L9/06<br>C08J3/20 |
| X,P<br>A,P | EP 3 431 526 A1 (SUMITOMO RUBBER IND [JP])<br>23 January 2019 (2019-01-23)<br>* paragraphs [0098], [0103] *<br>* table 1 *<br>* claims 1, 4, 6 * | 1-7,9,10<br>8 | |
| A | EP 3 165 566 A1 (SUMITOMO RUBBER IND [JP])<br>10 May 2017 (2017-05-10)<br>* page 16 *<br>* paragraphs [0146], [0148] * | 1-10 | |
| A | US 2012/053263 A1 (MIYAZAKI TATSUYA [JP])<br>1 March 2012 (2012-03-01)<br>* paragraphs [0094], [0104] *<br>* tables 1,2 * | 1-10 | TECHNICAL FIELDS SEARCHED (IPC)<br>B60C<br>C08K<br>C09J<br>C08L<br>C08J |

The present search report has been drawn up for all claims

2

| Place of search | Date of completion of the search | Examiner |
|---|---|---|
| Munich | 9 August 2019 | Nikolai, Joachim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 19 17 5979

This annex lists the patent family members relating to the patent documents cited in the above-mentioned European search report. The members are as contained in the European Patent Office EDP file on
The European Patent Office is in no way liable for these particulars which are merely given for the purpose of information.

09-08-2019

| Patent document cited in search report | Publication date | Patent family member(s) | Publication date |
|---|---|---|---|
| EP 3300921 A1 | 04-04-2018 | EP 3300921 A1 | 04-04-2018 |
| | | US 2018094107 A1 | 05-04-2018 |
| EP 3431526 A1 | 23-01-2019 | EP 3431526 A1 | 23-01-2019 |
| | | JP 2019019267 A | 07-02-2019 |
| EP 3165566 A1 | 10-05-2017 | CN 106459514 A | 22-02-2017 |
| | | EP 3165566 A1 | 10-05-2017 |
| | | JP 6059367 B2 | 11-01-2017 |
| | | JP WO2016002506 A1 | 27-04-2017 |
| | | US 2017174001 A1 | 22-06-2017 |
| | | WO 2016002506 A1 | 07-01-2016 |
| US 2012053263 A1 | 01-03-2012 | CN 102382342 A | 21-03-2012 |
| | | JP 5437951 B2 | 12-03-2014 |
| | | JP 2012046602 A | 08-03-2012 |
| | | US 2012053263 A1 | 01-03-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016074834 A
- JP 2010138359 A
- JP 2010174169 A
- JP 2014019841 A